# EUROPEAN PATENT APPLICATION

(11) **EP 2 407 691 A1**
(43) Date of publication of application: **18.01.2012**
(21) Application number: 11174262.3
(22) Date of filing: 15.07.2011
(51) Int. Cl.: F16H 48/08

(54) **A differential assembly for a vehicle**

(30) Priority: 15.07.2010 IE 20100446
(71) Applicant: Technology Investments Limited, Navan, County Meath (IE)
(72) Inventor: Nolan, John, County Meath (IE)
(74) Representative: Schütte, Gearoid

(57) **Abstract**

A differential assembly according to the invention and indicated generally by the reference numeral (25) comprises a differential housing (2) containing a spider (3) on which are rotatably mounted a number of planet bevel gears (4, 5) which rotatably engage the bevel gears (6,7) which are spline mounted on the output shafts (8,9). The output shafts (8,9) are connected via articulating joints to propshafts that are driveably connected to the road wheels of the vehicle. The vehicle engine drives a propshaft by means of various gear mechanisms. This propshaft is connected to the differential assembly input shaft (10) by means of a coupling (11) on the input shaft (10) so as to transmit torque to the differential assembly by means of a pinion gear (12) on the input shaft (10). The pinion gear (12) meshes with a crown wheel bevel gear (13) which is mounted on the differential housing (2) so as to transmit the engine torque to the housing (2).The crown wheel bevel gear (13) has gear teeth (14) which face away from the differential assembly spider (3) thus providing a relatively large offset (A) between the axis (15) of the input shaft (10) and the axis (16) of the spider (3).

## Description

This invention relates to vehicle differential assembles.

### BACKGROUND OF THE INVENTION

In conventional trucks with one or more rear driven axles it is normal for the transmission shaft to be more or less centrally disposed in relation to the longitudinal axis of the truck chassis. In trucks with drive to the front wheels the driveline is normally disposed to one side to avoid fouling the engine sump and transmission. With a central driveline the engine would have to be mounted high in the chassis with detrimental effect upon the centre of gravity of the vehicle and packaging of the power pack. Such all wheel drive vehicles typically have a transfer gearbox to transmit the drive to front and rear and this gearbox is so arranged that the output is offset to one side to facilitate mating with the offset driveline. The beam axles on such trucks commonly have the differential offset in the axle beam to correspond with the driveline offset.

In the case of independently sprung trucks with drive to some or all of the front wheels offsetting the differential gearbox to one side as is customary in beam axle trucks can cause difficulty. The independent suspension requires that the driveshafts connecting the differential outputs to the wheels be fitted with articulating joints of either the universal or constant velocity type. Frequently the articulation capacity of these joints is the factor limiting the wheel travel of the suspension system. Wheel travel is also a factor of major importance in high performance off road heavy vehicles. High propshaft joint articulation is also detrimental to durability of the driveline. The shorter the propshaft the greater the required articulation for a given wheel travel. To reduce articulation the longest possible propshafts are desirable.

It is evident that the longest possible propshafts require that the differential housing be centrally disposed in the vehicle and, with a conventional input shaft geometry, this implies a centrally disposed driveline which is undesirable for the reasons mentioned above.

The present invention is directed towards overcoming this problem.

### SUMMARY OF THE INVENTION

According to the invention there is provided a differential assembly for a vehicle including:
a differential housing containing a gear support element on which are rotatably mounted a number of planet bevel gears which rotatably engage complementary bevel gears which are mounted on a pair of drive output shafts, said drive output shafts for connection to road wheels of a vehicle,
a drive input gear mounted on the differential housing,
a drive input shaft having an input for connection to an engine of the vehicle and an output driveably connected to the drive input gear on the differential housing by means of a drive transmission assembly,
an axis of the drive input shaft and an axis of the gear support element being spaced apart and parallel,
said drive transmission assembly being adapted to offset the axis of the drive input shaft and the axis of the gear support element by a preset desired amount. Advantageously the present invention provides a means whereby the differential input shaft may be significantly offset to accommodate an offset driveline propshaft whilst maintaining a central location of the differential assembly thus ensuring the maximum possible differential to wheel propshaft length enabling maximum suspension travel to be achieved. The offset is greater than 150mm and typically will be in the order of 250mm to 300mm.

In one embodiment of the invention the drive input gear mounted on the differential housing comprises a crown wheel bevel gear which meshes with a complementary bevel gear of the drive transmission assembly mounted at the output of the drive input shaft, said crown wheel bevel gear having a rotational axis which is perpendicular to the axis of the gear support element, said crown wheel bevel gear being mounted on the differential housing spaced-apart from the gear support element, and said crown wheel bevel gear having gear teeth which face away from said gear support element.

In another embodiment said crown wheel bevel gear is adjustably mounted on the differential housing for axial movement of the crown wheel bevel gear on the differential housing for adjustment of the distance between the gear teeth of the crown wheel bevel gear and the axis of the gear support element.

In a further embodiment the crown wheel bevel gear has a bore which is slidably engageable with a complementary gear mounting portion of an exterior of the differential housing, said gear mounting portion having at its inner end an outwardly projecting gear locating ring having an outer mounting face parallel to the axis of the gear support element and engagable by the crown wheel bevel gear to position the crown wheel bevel gear on the differential housing.

In another embodiment the bore of the crown wheel bevel gear is stepped having a socket at its inner end for reception of the gear locating ring.

In another embodiment the drive transmission assembly is a gear train.

In another embodiment the drive input gear mounted on the differential housing comprises a crown wheel bevel gear which meshes with a complementary bevel gear of the drive transmission assembly mounted at the output of the drive input shaft, said crown wheel bevel gear having a rotational axis which is perpendicular to the axis of the gear support element, the drive transmission assembly comprising a first spur gear wheel mounted on the drive input shaft and driveably connected to a second spur gear wheel, said second spur gear wheel connected by means of a drive shaft to a coaxial drive input bevel gear meshed with the crown wheel bevel gear.

In another embodiment one or more intermediate spur gear wheels are mounted in the gear train between the first spur gear and the second spur gear.

In another embodiment the crown wheel bevel gear has gear teeth which face towards the gear support element mounted in the differential housing.

In another embodiment the crown wheel bevel gear has gear teeth which face away from the gear support element mounted in the differential housing.

In another embodiment the drive input gear mounted on the differential housing is a spur gear, and the drive transmission assembly comprises a drive input spur gear driveably engaged with the spur gear on the differential housing, said drive input spur gear connected by means of an intermediate drive shaft to a coaxial bevel gear, said bevel gear driveably engaging a complementary drive input bevel gear mounted at the output of the drive input shaft.

In another embodiment the drive transmission assembly comprises a toothed chain drive.

In another embodiment the drive transmission assembly comprises a sprocket chain drive.

In another embodiment the drive input gear is integrally formed with the differential housing.

### BRIEF DESCRIPTION OF THE DRAWINGS

The present invention will be more fully understood from the following description of some embodiments thereof, given by way of example only, with reference to the accompanying drawings, in which:
Fig. 1 is a sectional plan view of a prior art differential assembly;
Fig. 2 is a sectional plan view of a differential assembly according to a first embodiment of the invention;
Fig 2a is an enlarged detail view showing portion of the differential assembly of Fig. 2;
Fig. 3 is a sectional plan view of a differential assembly according to a second embodiment of the invention;
Fig. 4 is a sectional plan view of a differential assembly according to a third embodiment of the invention; and
Fig. 5 is a sectional plan view of a differential assembly according to a fourth embodiment of the invention.

### DETAILED DESCRIPTION OF PREFERRED EMBODIMENTS

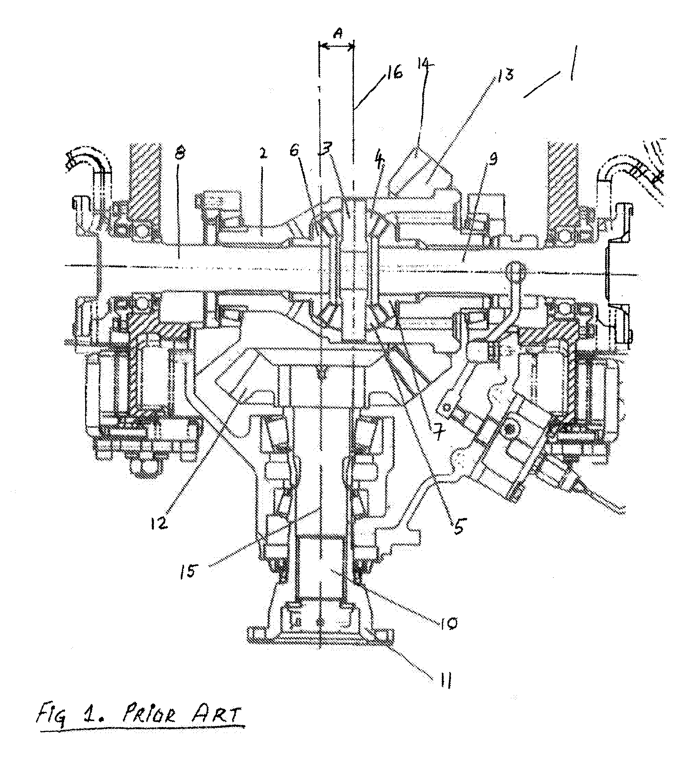

Referring initially to Fig. 1 a typical example of prior art is shown for illustrative purposes. A differential assembly 1 for a vehicle comprises a differential housing 2 containing a gear support element formed by a spider 3 on which are rotatably mounted a number of planet bevel gears 4,5 which rotatably engage bevel gears 6,7 which are spline mounted on output shafts 8,9. Said output shafts 8,9 are connected via articulating joints (not shown) to propshafts (not shown) that are driveably connected to the road wheels of the vehicle. The vehicle engine drives a propshaft (not shown) by means of various gear mechanisms, which propshaft is connected to a differential assembly input shaft 10 by means of a coupling 11 splined or otherwise fixed onto an input end of said input shaft 10 so as to transmit torque to the differential assembly 1 by means of a bevel pinion gear 12 which is integral with or otherwise joined to an output end of the input shaft 10. The pinion gear 12 meshes with a crown wheel bevel gear 13 which is mounted on and secured to the differential housing 2 or forming an integral part of said housing 2 so as to transmit the engine torque to said housing 2. In a typical prior art differential assembly 1, as shown in Fig.1, the crown wheel gear teeth 14 face towards the differential assembly spider 3. An axis 15 of the input shaft 10 is typically coaxial with an axis 16 of the spider 3 or slightly offset therefrom by a small distance A as shown in the illustrated example.

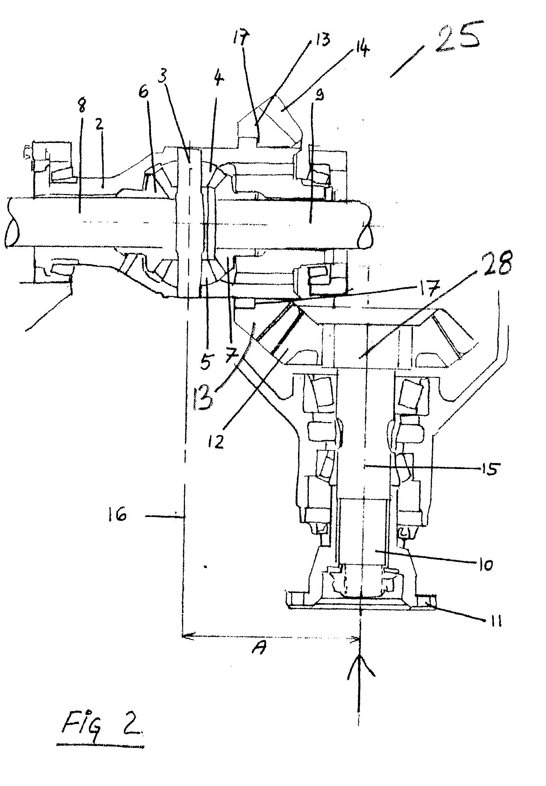

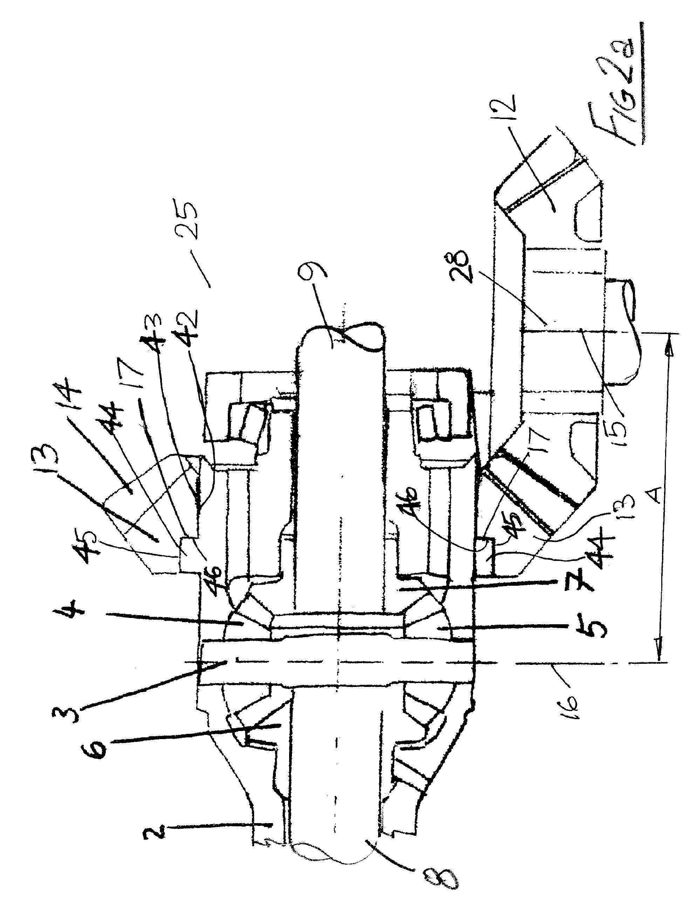

Turning now to Fig.2 an illustrative first embodiment of the invention is shown. Parts similar to those described previously are assigned the same reference numerals. A differential assembly, according to the invention and indicated generally by the reference numeral 25 comprises a differential housing 2 containing a spider 3 on which are rotatably mounted a number of planet bevel gears 4,5 which rotatably engage the bevel gears 6,7 which are spline mounted on the output shafts 8,9. Said output shafts 8,9 are connected via articulating joints (not shown) to propshafts (not shown) that are driveably connected to the road wheels of the vehicle. The vehicle engine drives a propshaft (not shown) by means of various gear mechanisms which propshaft is connected to the differential assembly input shaft 10 by means of a coupling 11 splined or otherwise fixed onto an input end of said input shaft 10 so as to transmit torque to the differential assembly by means of the pinion gear 12 which is integral with or otherwise joined to an output end 28 of the input shaft 10. The pinion gear 12 meshes with the crown wheel bevel gear 13 which is mounted on the differential housing 2 or forming an integral part of said housing 2 so as to transmit the engine torque to said housing 2. It will be noted that in accordance with the present invention the crown wheel gear teeth 14 face away from the differential assembly spider 3 thus significantly increasing the offset A as compared to a conventional system such as described in the typical prior art differential assembly shown in Fig.1.

The crown wheel bevel gear 13 has a central bore 42 which is slidably engaged with a complementary gear mounting portion 43 on an exterior of the differential housing 2 at one end of the differential housing 2. An outwardly projecting gear locating ring 44 is mounted at an inner end of the gear mounting portion 43. This ring 44 may conveniently be integral with the housing 2. The gear locating ring 44 has an outer mounting face 17 parallel to the axis 16 of the spider 3 and engageable by the crown wheel bevel gear 13 to position the crown wheel bevel gear 13 on the differential housing 2. The bore 42 of the crown wheel bevel gear 13 is stepped having at its inner end a socket 45 for reception of the gear locating ring 44. A radial annular land 46 at an inner end of the socket 45 abuts against the mounting face 17. Shims may be interposed between the outer mounting face 17 of the gear locating ring 44 and the land 46 to increase the offset A by moving the crown wheel bevel gear 13, and in particular the crown wheel gear teeth 14, away from the spider 3. This facilitates adjustment of the distance between said crown wheel gear teeth 14 and the axis 16 of the spider 3 and thus adjustment of the offset A as required.

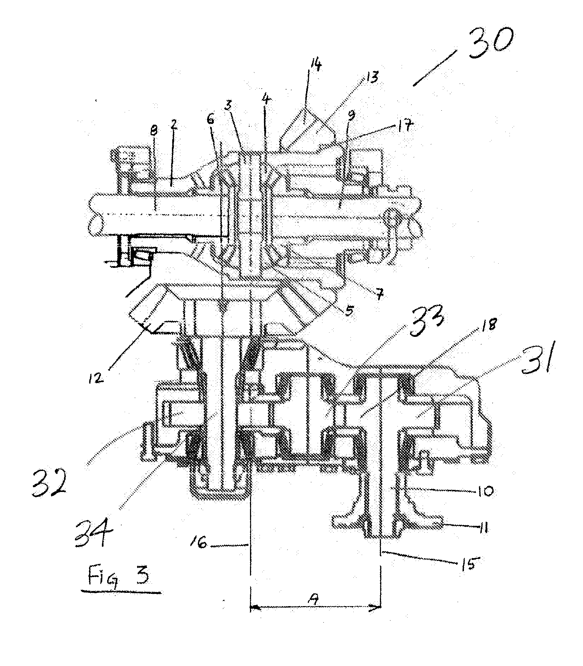

Referring now to Fig.3 there is shown a differential assembly according to a second embodiment of the invention indicated generally by the reference numeral 30. Parts similar to those described previously are assigned the same reference numerals. In this embodiment the differential assembly 30 has an input pinion 12 and differential assembly arrangement similar to that shown and previously described in relation to the prior art illustrated in FIG.1 in which the crown wheel 13 orientation is unchanged in relation to the differential spider 3. However, in accordance with the present invention a train of gears 18 is incorporated in the differential assembly 30 to provide the significant offset A between the input shaft axis 15 and the spider axis 16. Advantageously this arrangement retains the conventional orientation of the crown wheel 13 with regard to the differential assembly which may have benefits relating to assembly, commonality and cost. In this case the gear train 18 comprises a first spur gear 31 mounted at the output end 28 of the input drive shaft 10. The first spur gear 31 driveably connects with a second spur gear 32 via an intermediate spur gear 33. The second spur gear 32 driveably connects with the input pinion bevel gear 12 by means of a common drive shaft 34 on which both gears 12,32 are mounted.

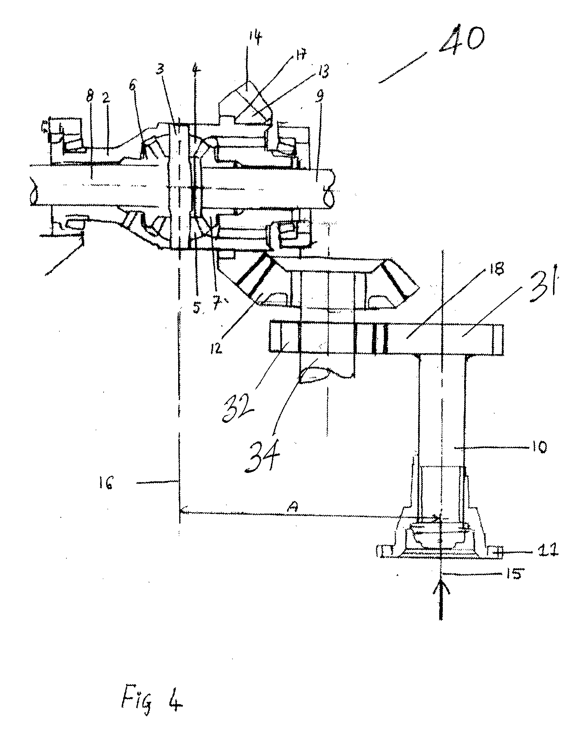

Such an arrangement of gear train 18 as shown in Fig.3 may also be applied with advantage to an arrangement with reversed crown wheel 13 orientation as further illustrated and described in Fig.4 which shows a differential assembly according to a third embodiment of the invention indicated generally by the reference numeral 40. Parts similar to those described previously are assigned the same reference numerals. In this case the gear train 18 comprises the first spur gear 31 which directly engages with the second spur gear 32.

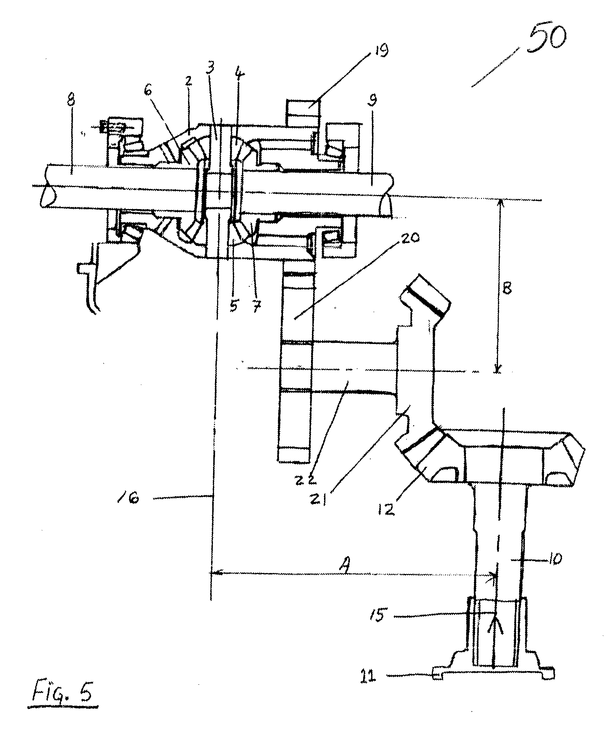

A fourth embodiment of the invention is illustrated in FIG.5 which shows another differential assembly according to a further embodiment of the invention, indicated generally by the reference numeral 50. Parts similar to those described previously are assigned the same reference numerals. In this differential assembly 50 the bevel type crown wheel 13 is replaced by a spur gear 19 mounted on the housing 2 and driven by a meshing drive input spur gear 20 that is rotatably connected to a bevel gear 21 by a common drive shaft 22, said bevel gear 21 meshing with input pinion bevel gear 12 mounted on input drive shaft 10. The rotational axes of the spur gear 19 and the drive shaft 22 are parallel and perpendicular to the axis 15 of the input shaft 10. This embodiment offers the possibility to easily vary the offset distance A by varying the length of the drive shaft 22. A further advantage of this configuration is that the drive shaft 22 can be lowered in the vertical plane thus reducing a second offset B between the output shaft 9 and the drive shaft 22, decreasing overall longitudinal length of the assembly, increasing clearance above the assembly and lowering the centre of gravity.

In accordance with the broad teachings of this invention a differential assembly with a significantly offset input shaft is described. This description refers to some embodiments of the invention only and the invention is not limited to these embodiments which are here used as a general example of the invention for explanatory purposes .It is an object of this invention to provide a differential assembly with an offset input flange for an independently suspended truck driveline such that the differential assembly may be centrally located on or close to the longitudinal axis of the truck whilst the driveline propshafts may be offset in the lateral direction so that the engine and transmission may be positioned more or less centrally and substantially alongside said propshaft thus permitting a lower engine mounting position than would be possible were the propshaft to be mounted centrally and thus passing underneath said engine and transmission assembly. This advantageous central positioning of the differential housing permits the longest possible differential to wheels driveshafts to be fitted with advantageous results for driveshaft articulating joint durability and enhanced wheel suspension travel.

In the invention a differential assembly has a housing comprising one or more parts and a differential mechanism rotatably mounted in the housing. The differential mechanism includes a support member or spider disposed therein for supporting four rotating planet gears. A crown wheel gear is attached to a differential carrier, which contains the 'sun' and 'planet' wheels or gears, which are a cluster of four opposed bevel gears in perpendicular plane, so each bevel gear meshes with two neighbours, and rotates counter to the third, that it faces and does not mesh with. The two sun wheel gears are aligned on the same axis as the crown wheel gear, and drive the axle half shafts connected to the vehicle's driven wheels. The other two planet gears are aligned on a perpendicular axis which changes orientation with the ring gear's rotation. Without affecting the generality of the invention applications may contain two opposing planet gears, other embodiments may have differential designs employing different numbers of planet gears, depending on durability requirements. As the differential carrier rotates, the changing axis orientation of the planet gears imparts the motion of the ring gear to the motion of the sun gears by pushing on them rather than turning against them (that is, the same teeth stay in the same mesh or contact position), but because the planet gears are not restricted from turning against each other, within that motion, the sun gears can counter-rotate relative to the ring gear and to each other under the same force in which case the same teeth do not stay in contact.

A ring gear is rigidly mounted to the differential housing or is integrally formed therewith so as to rotate with said housing. An input mating pinion gear mounted on the input shaft and disposed at ninety degrees to said ring gear transfers the torque from the engine and transmission assembly to the differential and thence to the wheel propshafts. In conventional differential assemblies the ring gear is generally mounted in such a way that the teeth are facing the differential housing in such a manner that the input pinion shaft axis intersects or passes close to the axis of the planet gear spider in such a way as to have the input pinion shaft axis disposed more or less centrally to the differential housing assembly.

In embodiments of the invention herein described the ring gear orientation in relation to the differential housing is reversed so that the gear teeth are facing away from the differential housing such that the axis of the input pinion shaft is laterally displaced from its position by a distance of double the pinion ring gear offset. The offset distance can be varied in a number of ways as described herein.

In this specification the terms "comprise, comprises, comprised and comprising" or any variation thereof and the terms "include, includes, included and including" or any variation thereof are considered to be totally interchangeable and they should all be afforded the widest possible interpretation and vice versa.

It will be apparent from the above description that various other embodiments of the invention are possible without departing from the essence of the invention herein described or limiting the generality thereof. The various embodiments hereinbefore described may be varied in construction and detail within the scope of the appended claims.

## Claims

1. A differential assembly for a vehicle including:
a differential housing containing a gear support element on which are rotatably mounted a number of planet bevel gears which rotatably engage complementary bevel gears which are mounted on a pair of drive output shafts, said drive output shafts for connection to road wheels of a vehicle,
a drive input gear mounted on the differential housing,
a drive input shaft having an input for connection to an engine of the vehicle and an output driveably connected to the drive input gear on the differential housing by means of a drive transmission assembly,
an axis of the drive input shaft and an axis of the gear support element being spaced-apart and parallel,
said drive transmission assembly being adapted to offset the axis of the drive input shaft and the axis of the gear support element by a preset desired amount greater than 150mm.

2. The differential assembly as claimed in claim 1, wherein the drive input gear mounted on the differential housing comprises a crown wheel bevel gear which meshes with a complementary bevel gear of the drive transmission assembly mounted at the output of the drive input shaft, said crown wheel bevel gear having a rotational axis which is perpendicular to the axis of the gear support element, said crown wheel bevel gear being mounted on the differential housing spaced-apart from the gear support element, and said crown wheel bevel gear having gear teeth which face away from said gear support element.

3. The differential assembly as claimed in claim 2, wherein said crown wheel bevel gear is adjustably mounted on the differential housing for axial movement of the crown wheel bevel gear on the differential housing for adjustment of the distance between the gear teeth of the crown wheel bevel gear and the axis of the gear support element.

4. The differential assembly as claimed in claim 3, wherein the crown wheel bevel gear has a bore which is slidably engageable with a complementary gear mounting portion of an exterior of the differential housing, said gear mounting portion having at its inner end an outwardly projecting gear locating ring having an outer mounting face parallel to the axis of the gear support element and engagable by the crown wheel bevel gear to position the crown wheel bevel gear on the differential housing.

5. The differential assembly as claimed in claim 4, wherein the bore of the crown wheel bevel gear is stepped having a socket at its inner end for reception of the gear locating ring.

6. The differential assembly as claimed in claim 1 wherein the drive transmission assembly is a gear train.

7. The differential assembly as claimed in claim 6, wherein the drive input gear mounted on the differential housing comprises a crown wheel bevel gear which meshes with a complementary bevel gear of the drive transmission assembly mounted at the output of the drive input shaft, said crown wheel bevel gear having a rotational axis which is perpendicular to the axis of the gear support element, the drive transmission assembly comprising a first spur gear wheel mounted on the drive input shaft and driveably connected to a second spur gear wheel, said second spur gear wheel connected by means of a drive shaft to a coaxial drive input bevel gear meshed with the crown wheel bevel gear.

8. The differential assembly as claimed in claim 7, wherein one or more intermediate spur gear wheels are mounted in the gear train between the first spur gear and the second spur gear.

9. The differential assembly as claimed in claim 7 or claim 8 wherein the crown wheel bevel gear has gear teeth which face towards the gear support element mounted in the differential housing.

10. The differential assembly as claimed in claim 7 or claim 8 wherein the crown wheel bevel gear has gear teeth which face away from the gear support element mounted in the differential housing.

11. The differential assembly as claimed in claim 1, wherein the drive input gear mounted on the differential housing is a spur gear, and the drive transmission assembly comprises a drive input spur gear driveably engaged with the spur gear on the differential housing, said drive input spur gear connected by means of an intermediate drive shaft to a coaxial bevel gear, said bevel gear driveably engaging a complementary drive input bevel gear mounted at the output of the drive input shaft.

12. The differential assembly as claimed in claim 1 wherein the drive transmission assembly comprises a toothed chain drive.

13. The differential assembly as claimed in claim 1 wherein the drive transmission assembly comprises a sprocket chain drive.

14. The differential assembly as claimed in claim 1 wherein the drive input gear is integrally formed with the differential housing.
